# EUROPEAN PATENT SPECIFICATION

(11) **EP 0 934 447 B1**
(45) Date of publication and mention of the grant of the patent: **30.07.2003**
(21) Application number: 97943467.7
(22) Date of filing: 23.09.1997
(51) Int. Cl.: E02B 3/12

(54) **EROSION CONTROL SYSTEM**
EROSIONSSCHUTZSYSTEM
SYSTEME DE PROTECTION CONTRE L'EROSION

(30) Priority: 03.10.1996 US 720841
(43) Date of publication of application: 11.08.1999
(73) Proprietor: Pramono, Wasi Tri, Windsor, Ontario N9A 6R3 (CA); McCorquodale, John A., New Orleans, LA 70122 (US)
(72) Inventor: Pramono, Wasi Tri, Windsor, Ontario N9A 6R3 (CA); McCorquodale, John A., New Orleans, LA 70122 (US)
(74) Representative: Gee, Steven William
(86) International application number: PCT/US97/16903
(87) International publication number: WO 98/014668

(56) References cited:
- US-A- 4 219 961
- US-A- 4 375 928
- US-A- 4 664 552
- US-A- 5 556 228

## Description

### TECHNICAL FIELD

The present invention relates to breakwaters as wave control and coastal protection structures, and more particularly, an erosion control system of blocks affixed together by individual connecting members clad upon the surface of an embankment surrounding the shoreline.

### BACKGROUND ART

Shoreline erosion is a major threat to coastal areas where large land masses are exposed to the continual pounding of the ocean wavefronts. While this problem is of concern to any country having significant coastline, the problem is particularly acute in island nations, such as Japan, Indonesia, Malaysia, and the Philippines. Numerous systems have been proposed to prevent erosion at the interface of water and land.

U.S. Patent No. 5,108,222 (Jansson et al) discloses an articulated mat comprising concrete blocks arranged in rectangular and flexible grid. Each block has the shape of an elongated cube and has a hole centrally disposed therethrough enabling each block to be readily removed from a form used for casting each block.

U.S. Patent No. 4,474,504 (Whitman et al) discloses underwater erosion control system having primary elements that are equilateral triangles having truncated tips, each side of the triangle having a truncated, conically-shaped aperture disposed at the midpoint thereof. A link has truncated, conically-shaped ends that secure two abutting primary elements together, maintaining a fixed distance between the primary elements.

U.S. Patent No. 4,372,705 (Atkinson) discloses an articulated erosion control system of lock blocks and key blocks, which enable the blocks to be interlocked together without extraneous connectors. The lock blocks have a generally hexagonal shape, with cylindrical grooves in alternating sides thereof, and the key blocks comprise a central locking hub from which extend three separately spaced-apart locking arms.

U.S. Patent 4,664,552 (Schaaf) discloses an erosion control mat or wall comprising a set of cables (or rods) to which a number of concrete blocks can be attached. The concrete blocks each have a pair of transversely-spaced-apart slots therein for receiving two of the cables (or rods). Sleeves are movably mounted upon the cables (or rods) and can locate within appropriately-sized openings formed as extensions to the slots. When a sleeve is located within an opening of a block that block is secured to the cable (or rod). This document includes the features of the preamble of claim 1.

U.S. Patent 2,466,343 discloses a jetty formed from interconnected concrete blocks. The blocks are of inverted V shape with flat ends, the flat ends accommodating the connecting means by which adjacent blocks are connected together. The connecting means comprises a vertically-extending channel into which can be located one end of a projecting I-section member. One or more of the blocks in a jetty can have a vertical opening therethrough to receive a stake which is driven through the block into the underlying ground.

U.S. Patent No. 4,279,536 (Jarian) discloses a breakwater disposed upon a rubble mound. Each block includes marginal partial ducts on the four side surfaces that form ducts with some adjacent blocks or intermeshed engagement with the adjacent blocks. The breakwater includes an armour capping of blocks having interlocking surfaces disposed therebetween.

While these systems and others like them have generated much discussion and interest, none have provided a satisfactory solution.

What is needed is an integrated erosion control system which is mounted onto an embankment, the cladding having a high wave energy dissipation rate. An erosion control system is needed that can be advantageously used for redirecting and redistributing hydrodynamic forces caused by pounding seawater on an embankment, by cladding the embankment with an armour layer.

The erosion control system should include a plurality of blocks, and movement of the blocks relative to each other should be resisted by the use of connecting members which are disposed between each pair of adjacent blocks in the chain.

### DISCLOSURE OF THE INVENTION

An array of blocks can advantageously be used to dissipate the energy of waves of seawater or rivers breaking upon the embankment, by cladding the entire surface of the embankment with a layer made from closely aligning chains of blocks with connecting members. Without the cladding, the embankment would be soon destroyed by the constant pounding of the waves.

This erosion control system provides a more stable and economical design of breakwaters as wave control and coastal protection structures. The blocks of this erosion control system are integrated using a unique connecting member designed to carry the hydrodynamic forces acting on the blocks.

An erosion control system is provided herein which is useful for protection of shorelines, riverbeds, and the like from soil erosion caused by a wavefront. The erosion control system is for installation onto an embankment which abuts a wavefront. The embankment has two sides and a crown. The system comprising a plurality of blocks which are configured to be positioned generally to cover a substantial portion of the embankment, each block having a first passageway extending into the block and a second passageway extending from the first passageway and through the block, the second passageway intersecting and connecting with the first passageway. The erosion control system includes a plurality of connecting members for connecting the blocks longitudinally so that the blocks extend up one side of the embankment, over the crown, and down the other side of the embankment. Each adjoining member has a rod portion which is configured to be positioned to extend from the second passageway of one block to the first passageway of an adjacent block. Lateral end securing members are also provided. The invention is characterized as follows, namely, each first passageway is a central, vertical passageway, each second passageway is a central, longitudinally-extending channel which traverses the central vertical passageway at an angle thereto and extends from one end of the block to the other end thereof, and the connecting member has a central body portion, a pair of lateral rods, and a pair of lateral end securing members. The central body member is configured to be positioned between adjacent blocks for absorbing compressive forces between adjacent blocks. The lateral rods are configured to be disposed within an associated longitudinally-extending passageway of a block. The securing members each are configured to be positioned within the central vertical passageway of a block. Each securing member has a width which is not greater than the width of the central vertical passageway but has a width which is greater than the width of the longitudinally-extending passageway.

As disclosed above, the system typically includes an integrated layer of blocks mounted upon and covering an embankment adjacent to the shoreline. The layer comprises a plurality of blocks joined together in a chainlike configuration by connecting members disposed between neighbouring blocks. Each chain is linearly aligned in a direction abutting the wavefront, and each chain abuts neighbouring chains, but not affixed in any manner thereto.

The individual blocks are in the shape of a truncated pyramid, having rectangular top and bottom surfaces. The primary blocks include a central passageway, and a plurality of ducts extending from the top to the bottom surface, and substantially parallel to the axis of the block. The blocks retain the connecting member by a centrally disposed vertical passageway and two recessed longitudinally-extending openings commencing at the top surface and extending approximately halfway down the block and joining the lateral surfaces of the block and traversing the vertical passageway.

Each connecting member comprises a rod, the rod having a securing member at each end positionable in the central vertical passageway of adjacent blocks to prevent axial extension of the distance between the blocks. The rod further comprises a central body member. In the preferred embodiment, the central body member is slidable along the length of the rod. Each connecting member provides the means for adjoining the blocks to a pair of neighbouring blocks in the chain-like configuration to resist hydrodynamic forces urging the primary block toward a neighbouring block.

The hydrodynamic forces induce tensile and compressive forces within the connecting members. Accordingly, each connecting member has a tension resistance mechanism and a compression resistance mechanism. The tension resistance mechanism comprises the combination of the rod and the pair of end securing members. The compression resistance mechanism comprises the slidable engagement between the central portion of the body member and the rod. All linear tensile forces are absorbed within the chain by the rods and end securing members. All linear compressive forces are absorbed by the body members.

The integrated amour layer covers the embankment and comprises a plurality of chains, each chain comprising a plurality of alternating blocks and connecting members. Each block is in the shape of a generally-truncated pyramid with square top and bottom
surfaces that are normal to the axis of the block. Each block, save for the blocks at the end of the chain, is sandwiched between a pair of neighbouring blocks, and is attached to each neighbouring block by a connecting member.

The erosion control system will distribute the hydrodynamic forces to all block units arranged in each chain to increase the stability of the block units. Since the blocks in the chain work together, the size of the individual blocks can be reduced. Furthermore, since the block layer is now stronger than traditional designs, the size of the core materials can be reduced significantly.

For a more complete understanding of the erosion control system and components of the present invention, reference is made to the following detailed description and accompanying drawings in which the presently preferred embodiments of the invention are shown by way of example. As the invention may be embodied in many forms without departing from the essential characteristics thereof, it is expressly understood that the drawings are for purposes of illustration and description only. Throughout the description, like reference numbers refer to the same component throughout the several views.

### BRIEF DESCRIPTION OF THE DRAWINGS

Figure 1 is an elevational view of the preferred embodiment of the erosion control system of the present invention mounted onto an embankment;
Figure 2 is an enlarged elevational view of a chain of blocks and connecting members of the preferred embodiment of the erosion control system of Figure 1;
Figure 3 is an exploded isometric view of a connecting member of the preferred embodiment of the erosion control system of Figure 2;
Figure 4 is a side elevational view partially cutaway of the chain of blocks and connecting members of the preferred embodiment of the erosion control system of Figure 2;
Figure 5 is an enlarged side elevational view partially cutaway of the chain of blocks and connecting members of the preferred embodiment of the erosion control system of Figure 4;
Figure 6 is an enlarged sectional view taken through the centre of a connecting member from Figure 4 through Section 6-6;
Figure 7 is an enlarged sectional view taken through a portion of a block and a connecting member from Figure 4 through Section 7-7;
Figure 8 is an enlarged sectional view taken through the centre of a block from Figure 4 through Section 8-8;
Figure 9 is an enlarged top view of a chain of three blocks and two connecting members of the preferred embodiment of the erosion control system of Figure 1;
Figure 10A is a side elevational view of a submerged breakwater made in accordance with the teachings of the present invention;
Figure 10B is a side elevational view of a non-overtopped breakwater similar to Figure 1, made in accordance with the teachings of the present invention;
Figure 10C is a side elevational view of a berm breakwater made in accordance with the teachings of the present invention;
Figure 10D is a side elevational view of a toe protection structure for a vertical wall made in accordance with the teachings of the present invention;
Figure 10E is a side elevational view of a sea wall made in accordance with the teachings of the present invention;
Figure 11A is a side elevational view of a submerged breakwater on a sloping coastline made in accordance with the teachings of the present invention;
Figure 11B is a side elevational view of a low-crested breakwater on a sloping coastline made in accordance with the teachings of the present invention;
Figure 11C is a side elevational view of a non-overtopped breakwater on a sloping coastline made in accordance with the teachings of the present invention; and
Figure 12 is a graph showing the typical simultaneous wave forces as applied to two blocks at the leading edge of a low-crested breakwater.

### DETAILED DESCRIPTION OF THE PREFERRED EMBODIMENTS

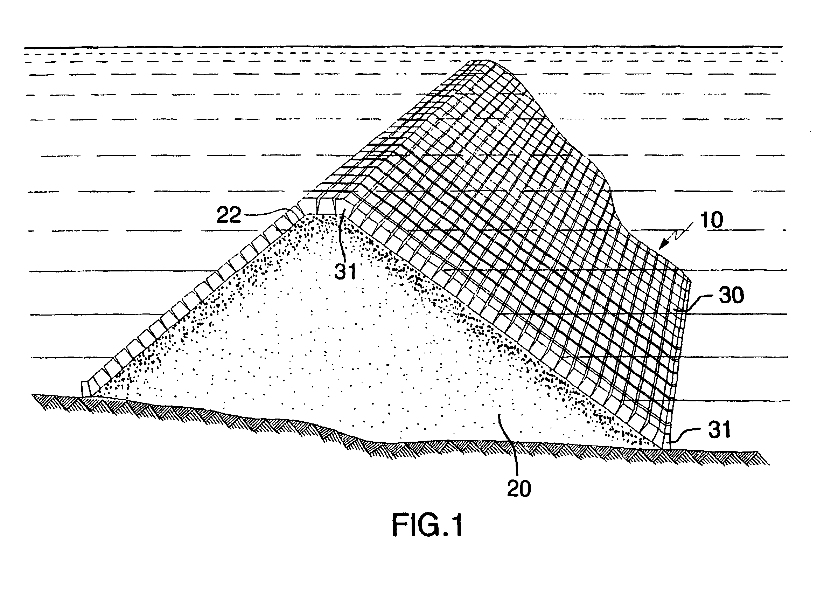

The preferred embodiment of the system is shown in Figures 1-12. Figure 1 discloses the erosion control system 10 clad onto an embankment 20.

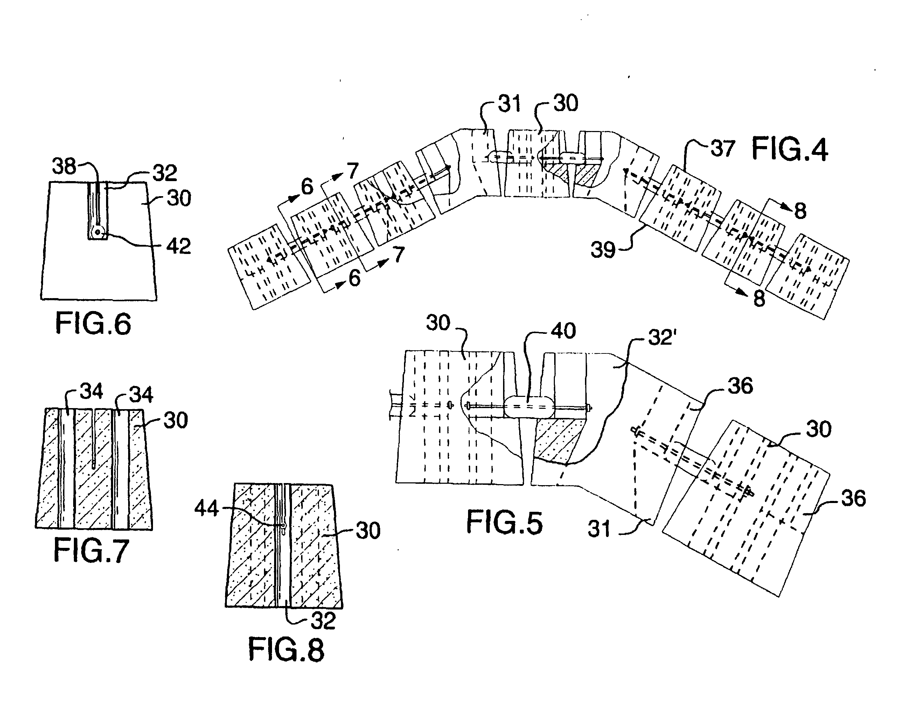

The erosion control system 10 comprises a plurality of blocks 30 generally covering the embankment 20, and connecting members 40 for retaining the blocks 30 with respect to neighbouring blocks 30 on the embankment 20. The blocks 30 and connecting members 40 are arranged relative to each other covering and protecting the embankment 20 in an endless array of chain-like configurations 24, with each chain-like configuration 24 abutting the wavefront (see Figures 4 and 5).

Each block 30 has a generally truncated pyramid shape, with a square top and bottom surface 7 and 39 that are normal to an axis of the block 30. The blocks 30 are only adjoined together in a linear direction along the chain 24, and there is no interlinkage between adjacent chains 24.

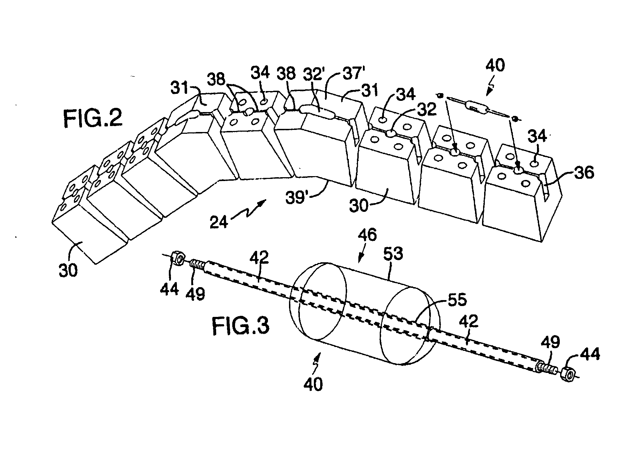

With reference to Figure 2, each block 30 includes means for reducing hydrodynamic uplift forces which are applied to the bottom surface 39. The reducing means comprises a passageway 32 which is disposed in the centre of each block 30. Four ducts 34 generally-equally-spaced between the central passageway 32 and ducts 34 extend from the top surface 37 to the bottom surface 39, and are generally-parallel to the axis of the block 30.

As shown in Figure 2, each of the primary blocks 30 includes means which are disposed on opposing sides thereof for receiving a pair of neighbouring blocks 30, one on each side. The opposing lateral neighbouring surfaces of each block 30 include a recessed opening 36 therein, extending from the top surface 37 to halfway down toward the bottom surface 39. Since the shape of the block 30 is a truncated pyramid, the size and angle of the recessed openings 36 become progressively larger moving in a downward direction relative to the block 30. The maximum angle of the recessed opening 36 is a semicircle, at the lowermost portion of the recessed openings 36.

Each block 30 also includes a longitudinally-extending channel 38 having parallel sidewalls extending centrally through each block 30, from one recessed opening 36 surface through the central vertical passageway 32, and to an opposing recessed opening 36 surface, as shown in Figures 2 and 6. The longitudinally-extending channels 38, like the recessed openings 36, extend from the top surface 37 to halfway down toward the bottom surface 39.

The entire chain 24 comprises the same block 30 throughout, except for two crown-corner blocks 31 which are disposed at the top of the crown 22 of the embankment 20. The crown-corner blocks 31 have an irregular shape. One crown-corner block 31 is on the seaward side of the crown 22, and the other is on the landward side of the crown 22.

Since the crown 22 is horizontal, the top and bottom surfaces 37' and 39' of the crown-corner blocks 31 are formed by the intersection of two planes, the two lines of intersection being parallel to each other and parallel to the seaward and landward edge of the embankment 20. The top surface 37' of the crown-corner blocks 31 are parallel to the bottom surface 39' of each block 31. The angle of the intersecting planes on the top and bottom surfaces 37' and 39' of the crown-corner blocks 31 are supplementary to the slope of the embankment 20 on the seaward and landward sides of the embankment 20, respectively, since part of the block 31 is disposed on the slope and the other part on the crown 22.

The crown-corner blocks 31 have two channels 38 and two recessed openings 36, the same as the other blocks 30. However, the only opening extending from the top surface 37' to the bottom surface 38 for uplift force relief is an oblong-shaped central passageway 32' that has the same diameter as the central passageways 32 on the other blocks 30. The central passageway 32' is centred relative to block 31 with the oblong portion being generally parallel to the channels 38. The shape of the oblong central passageway 32' on the top and bottom surfaces 37' and 39' is generally a capsule being rectangular, with circular ends. The shape of the oblong portion of the central passageway 32' is smallest midway down the block 31 and expands outwardly moving toward the
top and bottom surface 37' and 39'. Also, while Figure 1 shows two crown-corner blocks 31 disposed at the base of the embankment 20, and inverted, one on the landward side and one on the seaward side, this is not necessary.

Each connecting member 40 comprises a rod 42, the rod having an element 44 at each end which is positionable in the central vertical passageway 32 of adjacent blocks to prevent axial extension of the distance between the blocks 30. To achieve this purpose, the width of the element 44 must be less than the width of the central vertical passageway 32, but greater than the width of the longitudinally-extending channel 38. The rod 12 further comprises a central body member 46. In the preferred embodiment, the central body member 46 is slidable along the length of the rod 42. Each connecting member 40 thereby includes means for adjoining the blocks 30 to a pair of neighbouring blocks 30 in the chain-like configuration to resist hydrodynamic forces urging the primary block 30 toward a neighbouring block 30.

The preferred embodiment of the connecting member 40 is shown in Figure 3. In the preferred embodiment, the connecting member 40 comprises a stainless steel rod 42 with threaded ends 49, two fasteners 44 disposed one at each threaded end 49, and central body member 46. Washers may be used between the fasteners 44 and the block 30 to improve wear. Each rod 42 has a generally-cylindrical shape, the diameter of which is slightly less than the diameter of the channel 38 for fitting therewith. Each fastener or washer is slightly larger than the channel 38 to enable secure retention therewithin of the rod 42 when positioned within the central passageway 32.

The preferred embodiment of the body member 46 is also shown in Figure 2. In the preferred embodiment, the body member 46 has a generally-cylindrical shape with semispherical ends, like a capsule, the semispherical
ends cooperatively engaging into the recessed openings 36. In the preferred embodiment, the central member 46 is filled with nonreinforced concrete to enable the central body member 46 to withstand compressive forces which are generated by the continual pounding of the waves. The rod 42 includes a thin layer of epoxy to prolong the life of the rod 42.

The central body member 46 has a central aperture 55 extending therethrough, and the diameter of the aperture 55 is greater than the diameter of the rod 42, enabling the body member 46 to move freely along the rod 42, and therefore avoid tensile stress within the central body member 46. Also, PVC pipe (polyvinyl chloride pipe) inserted in the aperture 55 having the same diameter and length as the aperture 55 may be used to reduce the frictional force between the rod 42 and the body member 46. Concrete has a strong compressive stress, and since this design only allows compressive forces within the central body member 46, the concrete does not need reinforcement.

The concrete used in the blocks 30 and in the body portion of the connecting member 40 is preferably CSA Standard CAN 3-A23.3 M89 or ACI 318. The compressive stress is 30 to 35 Mpa (after twenty-eight days).

The water-to-cement ration is 0.5. The aggregate to cement ratio is 4. The fine and coarse aggregate ratio 1:2. The slump is 7.2 cm (3 inches). A smooth surface is preferred to reduce surface roughness of the block 30, which also is used to improve block life. The energy dissipation mainly breaks waves for submerged breakwaters.

During engagement, each connecting member 40 is sandwiched between a pair of blocks 30, the central body member 46 resting upon the neighbouring recessed openings 36 of each block 30, and the securing members 44 secured within the central vertical passageway 32 of each.

The hydrodynamic forces which are applied to the erosion control system 10 induce tensile and compressive forces within the connecting members 40. Accordingly, each connecting member 40 has a separate tension resistance mechanism and a compression resistance mechanism. The tension resistance mechanism comprises the combination of the rod 42 and the pair of securing members 44. The securing members 44 in this preferred embodiment are threaded fasteners 44. The compression resistance mechanism comprises the slidable engagement between the central body member 46 and the rod 42. All linear tensile forces are absorbed within the chain 24 by the rods 42 and securing members 44, and all linear compressive forces are absorbed by the central body members 46.

The rod 42 is preferably made of stainless steel type 316, but type 304 is also acceptable. The length of the rod 42 depends upon the size of the block 30. The diameter of the rod 42 is from 12.7 mm to 15.9 mm. The body member 46 has an inner diameter of 3 cm and an outer diameter of 190 mm, with a length of 375 mm.

The rod 42 is initially cleansed in an appropriate manner. A phosphate coating and a chromate conversion coating may then be applied, both of which are widely used as paint bases on both uncoated and galvanized steel. The coating may be applied by spraying, dipping, or flow-rolling. Roller coating or electrophoretic deposition may also be used.

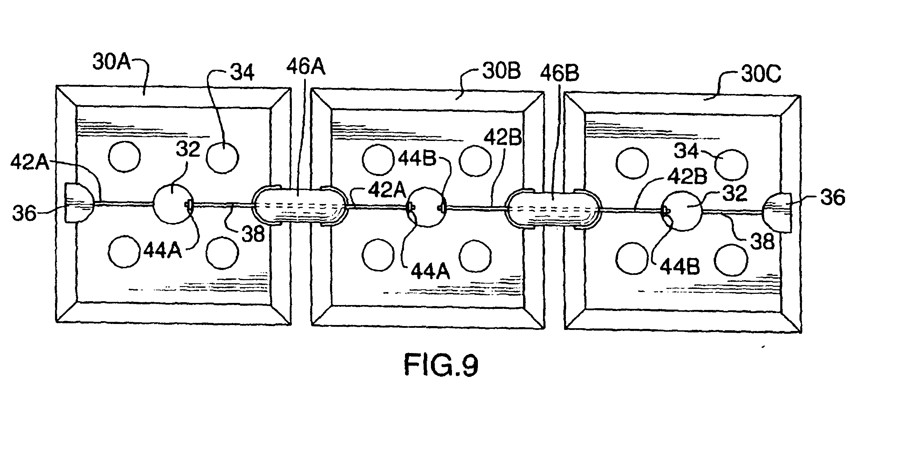

To understand better the force distribution system within the connecting members 40, refer to Figure 9. When hydrodynamic forces are applied to block 30B, in the direction of block 30C, rod 42A, and central body member 46B will restrict such movement, creating tension in rod 42A, and compression in body member 46B. Rod 42A and the body member 46B act together, in a simultaneous manner, to prevent such movement. As block
30B moves toward block 30C, a gap appears between central body member 46A and block 30B, which ensures that there is no compressive stress produced in central body member 46A. A gap also appears between block 30B and fastener 44B which is disposed within block 30B, ensuring that no tensile stress is produced in rod 42B. The repositioning of block 30B is resisted by the tensile resistance of the rod 42A and the compressive resistance of the central body member 46B. This repositioning force will be distributed in the chain by rod 42A pulling block 30A toward block 30B, and body member 46B pushing block 30C in the general direction of a block (not shown), the next neighbouring block in the chain to block 30C. The more blocks 30 and connecting members 40 in the chain 24, the better will be the force distribution, resulting in smaller forces in each block 30.

During backwash, block 30B will tend to move toward block 30A, which will induce the opposite force in the block chain, as rod 42B will absorb the tensile forces, and central body member 46A will absorb the compressive forces.

The rod 42 also carries bending stress when the block chain 24 rotates sideways. However, the bending stress is small, since the permitted angle and degree of rotation is small. Then channel 38 enables the block chain 24 to resettle into position, while retaining the connecting member 40 in place.

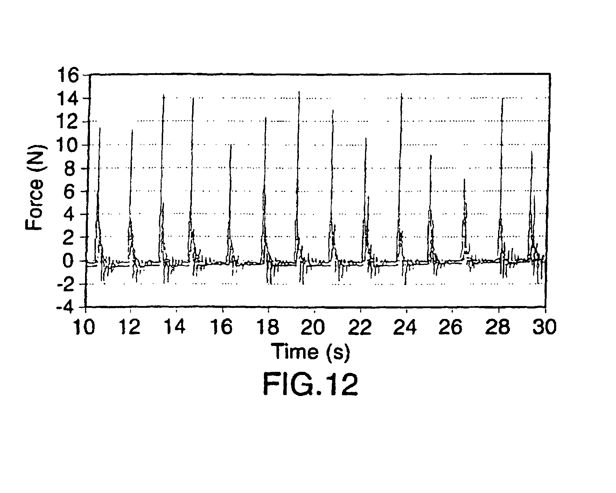

The maximum wave force does not act simultaneously on each block 30. Figure 12 is a double graph of the wave forces as applied to the crown-corner block 31 on the seaward side and to the neighbouring block 30 on the crown 22 immediately behind the crown-corner block 31. The solid graph line shows the wave forces applied to the crown-corner block 30 immediately behind the crown-corner block 31. As shown, when the wave force at the crown-corner block 31 reaches its peak, the wave force on the neighbouring block 30 is almost nil. The hydrodynamic forces on the low crested breakwaters are greater than the forces on submerged breakwaters, so Figure 12 illustrates the worst case.

It has been found that the dimensions of a breakwater may be significantly reduced by using erosion control system 10 of the present invention, because the size of the crown is significantly smaller than in conventional designs. The minimum crown width in the erosion control system 10 is one block 30 sandwiched between two crown-corner blocks 31, whereas the crown width in conventional designs is much larger. Also, it has been found that the maximum force on the blocks 30 on the mid-slope is much smaller than the force applied to the leading edge. Therefore, by covering the embankment 20 with the erosion control system 10 of the present invention, the breakwater has been greatly stabilized.

The blocks 30 have a square top and bottom surface 37 and 39. The block 30 preferably has a height of 0.8 metres for wave heights up to 3 metres, and a height of 3 to 5 metres. For submerged structures, most of the energy from the wave passes over the crown 22 of the integrated armour system 10. Consequently, the hydrodynamic forces acting upon the leading edges of the blocks 30, where the forces are the most intense, is insignificant, even though the wave height may be significant. Accordingly, a block 30 having a height of 0.8 metres may be used. A block 30 of 0.8 metres is stable with little or no movement if subjected to short waves with equivalent wave heights of up to 3.6 metres. For intermediate ranges a block 30 of 0.9 metres is recommended. For blocks 30 of to 0.8 m, a top surface length of 0.68 m is recommended; for block 30 of 0.9 m, a top surface length of 0.75 m is recommended; and for blocks 30 of 1.0 metre, a top surface length of 0.85 m is recommended. The length and width of the bottom surface 39 of each block 30 are the same as that of adjoining blocks 30.

For blocks of 0.8 m, a rod length of 75.5 cm is recommended; for blocks of 0.9 m, a rod length of 82.5 cm is recommended; and for blocks of 1.0 metre length, a rod of 92.5 cm is recommended.

The slope on the landward side need not be the same as the slope on the seaward side. The slope on the seaward side is preferably 1 (vertical) to 2 (horizontal), although steeper slopes of up to 1 to 1.5 may be used on the seaward side. The slope on the landward side may be steeper with a ratio to 1 (vertical) to 1.5 (horizontal). The steeper slope on the landward side may be cost-effective, reducing the amount of core material, and the number of blocks 30 and connecting members 40 used.

The height of the breakwater depends upon the slope of the sea bed, the location of the embankment 20, and the proposed height of the embankment 20. If the
crown 22 of the embankment 20 is not normally submerged (a low-crested breakwater), the height of the structure also depends upon the crown 22 elevation above the still water. The height of the breakwater is preferably approximately 1.50 metres above sea level during normal tides or levels. The distance from the shoreline is also flexible. A breakwater closer to the shoreline will be the most economical. The breakwater can be built as far as 200 metres from the shoreline.

The diameter of each duct 34 is slightly smaller than the diameter of the central vertical passageway 32, being approximately 160 mm. The width of the channel 38 is approximately 30 mm. Each recessed opening 36 has the same diameter as the central passageway 32, preferably 200 mm.

The blocks 30 may also be adjoined in a linear chain by a single corrosion-resistant wire or cable that fits through the channels 38, central passageway 32, and recessed openings of each chain (not shown). The cable is anchored into the base of the embankment 20 at the base of each chain. Also, the cable may be used in combination with the connecting members.

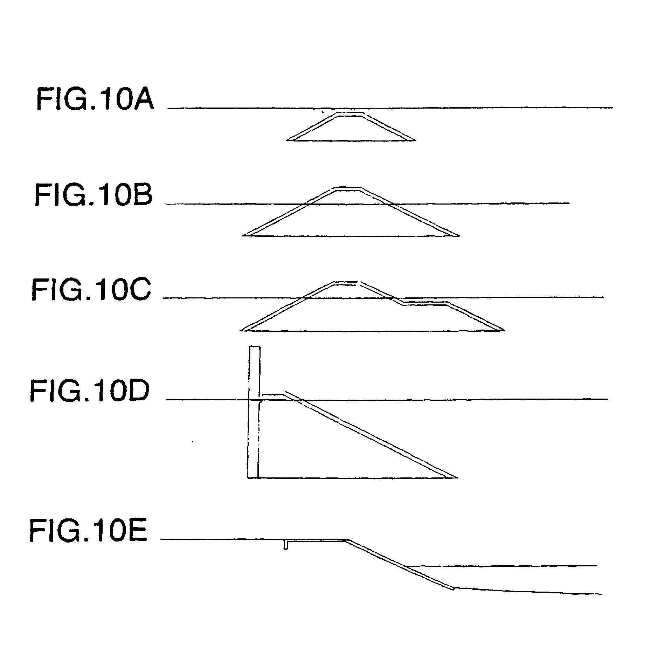

Figures 10A, 10B, 10C, 10D, and 10E disclose various breakwater configurations that may be constructed consistent with the teachings of the present invention. Figure 10A shows a submerged breakwater. Figure 10B shows another breakwater. Figure 10C shows a berm breakwater, Figure 10D shows a toe protection structure, and Figure 10E shows a sea wall.

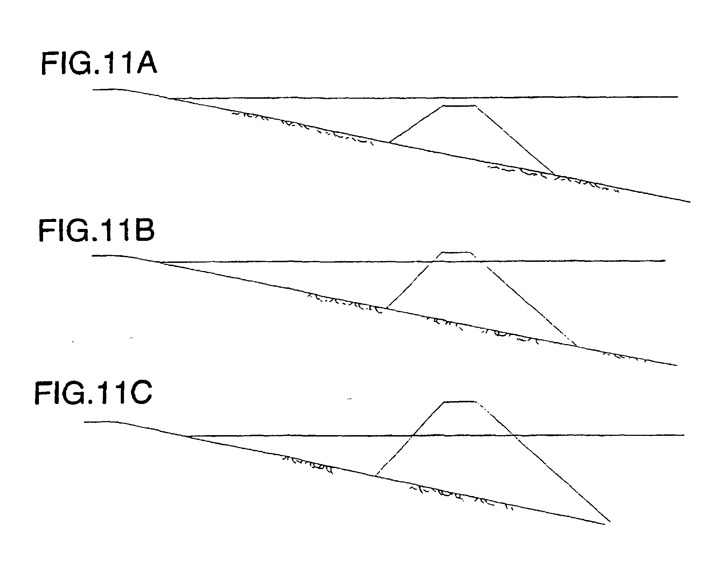

Figures 11A, 11B and 11C disclose side elevational views of breakwaters made in accordance with the teachings of the present invention. Figure 11A is a side elevational view of a submerged breakwater on a sloping coastline, Figure 11B discloses a low-crested breakwater on a sloping coastline, and Figure 11C discloses a nonovertopped breakwater on a sloping coastline.

## Claims

1. An erosion control system for installation onto an embankment (20) which abuts a wavefront, the embankment having two sides and a crown (22), said system comprising:
a plurality of blocks (30) which are configured to be positioned generally to cover a substantial portion of the embankment (20), each said block (30) having a first passageway (32) extending into said block and a second passageway (38) extending from said first passageway through said block, said second passageway (38) connecting with said first passageway (32); and
a plurality of connecting members (40) for connecting said blocks (30) longitudinally so that said blocks (30) extend up one side of said embankment, over said crown (22), and down the other side of said embankment, each said connecting member (40) having a portion (42) which is configured to be positioned to extend from said second passageway (38) of one block (30) to a second passageway (38) of an adjacent block (30), and lateral end securing members (44) at respective ends of said connecting member (40)
**characterized in that**
each said first passageway (32) is a central, vertical passageway (32);
each said second passageway (38) is a central, longitudinally-extending channel (38) which traverses said central vertical passageway (32) an angle thereto and extends from one end of said block (30) to the other end thereof;
said connecting member (40) comprising a central body member(46), a rod (42) passing through said central body member (46), and a lateral end securing member (44) at each end of the rod (42), said central body member (46) being configured to be positioned between adjacent blocks (30) for absorbing compressive forces between adjacent blocks (30), said rod (42) being configured to be disposed within said longitudinally-extending channel (38) of said block (30);
said securing members (44) each being configured to be positioned within said central vertical passageway (32) of a block (30); and
each said securing member (44) having a width not greater than the width of said central vertical passageway (32) but having a width which is greater than the width of said longitudinally-extending channel (38).

2. The system as recited in claim 1, **characterized in that** a plurality of said blocks are connected longitudinally by said connecting members to form a chain-like configuration, a plurality of said chain-like configurations being configured for resting next to, but not affixed to, each other on the embankment.

3. The system as recited in claim 1, **characterized in that** said blocks (30) have recesses (36) in side surfaces thereof to receive said central body portions (46).

4. The system as recited in claim 3, **characterized in that** said central body portions 46 are cylindrical having semispherical ends, and **characterized in that** said recesses (36) have a semispherical shape to cooperate with said semispherical ends of said central body members(46).

5. The system as recited in any one of claims 1 to 4, **characterized in that** said blocks (30) have a generally truncated pyramid shape.

6. The system as recited in any one of claims 1 to 5, **characterized in that** said securing members (44) are position-adjustable on said lateral rods (42).

7. The system as recited in any one of claims 1 to 6, **characterized in that** said central body members(46) are movable along said lateral rods (42).

8. The system as recited in any one of claims 1 to 7, **characterized in that** said blocks further include a plurality of ducts (34) extending from said top surface (37) to said bottom surface (39) of said block (30) for reducing hydrodynamic uplift forces which are applied to a bottom surface (39) of said block (30).

9. The system as recited in any one of claim 1 to 8, further **characterized by** including two crown blocks (31) positionable at a transition between said crown (22) and said sides of said embankment, said crown blocks (31) having first parallel upper and lower surfaces for positioning on said crown (22), and second parallel upper (37') and lower (39') surfaces angling downwardly from said first parallel upper (37) and lower surfaces (39).

## Patentansprüche

1. Erosionsschutzsystem zum Anbringen auf einem Wall (20), der an eine Wellenfront anstößt, wobei der Wall zwei Seiten und eine Krone (22) hat, wobei das genannte System Folgendes umfasst:
eine Mehrzahl von Blöcken (30), die gestaltet sind, um allgemein zum Abdecken eines beträchtlichen Teils des Walles (20) positioniert zu werden, wobei jeder genannte Block (30) einen sich in den genannten Block erstreckenden ersten Durchgang (32) und einen sich von dem genannten ersten Durchgang durch den genannten Block hindurch erstreckenden zweiten Durchgang (38) hat, wobei der genannte zweite Durchgang (38) mit dem genannten ersten Durchgang (32) verbunden ist, und
eine Mehrzahl von Verbindungselementen (40) zum Verbinden der genannten Blöcke (30) in Längsrichtung, sodass die genannten Blöcke (30) sich an einer Seite des genannten Walles hoch, über die genannte Krone (22) und auf der anderen Seite des genannten Walles hinunter erstrecken, wobei jedes Verbindungselement (40) einen Teil (42) hat, der konfiguriert ist, um positioniert zu werden, um sich von dem genannten zweiten Durchgang (38) von einem Block (30) zu einem zweiten Durchgang (38) eines angrenzenden Blocks (30) zu erstrecken, und Seitenendbefestigungselemente (44) an betreffenden Enden des genannten Verbindungselements (40) hat,
**dadurch gekennzeichnet, dass**
jeder genannte erste Durchgang (32) ein zentraler, vertikaler Durchgang (32) ist;
jeder genannte zweite Durchgang (38) eine zentrale, sich in Längsrichtung erstreckende Rinne (38) ist, die den genannten zentralen vertikalen Durchgang (32) in einem Winkel zu ihm durchquert und sich von einem Ende des genannten Blocks (30) zu dem anderen Ende davon erstreckt;
wobei das genannte Verbindungselement (40) ein zentrales Körperelement (46), eine durch das genannte zentrale Körperelement (46) verlaufende Stange (42) und ein Seitenendbefestigungselement (44) an jedem Ende der Stange (42) hat, wobei das genannte zentrale Körperelement (46) konfiguriert ist, um zwischen benachbarten Blöcken (30) positioniert zu werden zum Absorbieren von Druckkräften zwischen benachbarten Blöcken (30), wobei die genannte Stange (42) konfiguriert ist, um in der genannten in Längsrichtung verlaufenden Rinne (38) des genannten Blocks (30) angeordnet zu werden;
wobei die genannten Befestigungselemente (44) jeweils konfiguriert sind, um in dem genannten zentralen vertikalen Durchgang (32) eines Blocks (30) positioniert zu werden, und
wobei jedes genannte Befestigungselement (44) eine Breite hat, die nicht größer ist als die Breite des genannten zentralen vertikalen Durchgangs (32), aber eine Breite hat, die größer ist als die Breite der genannten in Längsrichtung verlaufenden Rinne (38).

2. System nach Anspruch 1, **dadurch gekennzeichnet, dass** eine Mehrzahl der genannten Blöcke durch die genannten Verbindungselemente in Längsrichtung verbunden sind, um eine kettenartige Konfiguration zu bilden, wobei eine Mehrzahl von kettenartigen Konfigurationen ausgeführt sind, um nebeneinander, aber nicht aneinander befestigt, auf dem Wall zu ruhen.

3. System nach Anspruch 1, **dadurch gekennzeichnet, dass** die genannten Blöcke (30) in Seitenflächen davon Ausnehmungen (36) haben zum Aufnehmen der genannten zentralen Körperstücke (46).

4. System nach Anspruch 3, **dadurch gekennzeichnet, dass** die genannten zentralen Körperstücke (46) zylindrisch mit hemisphärischen Enden sind, und **dadurch gekennzeichnet, dass** die genannten Ausnehmungen (36) eine hemisphärische Form haben zum Zusammenwirken mit den genannten hemisphärischen Enden der genannten zentralen Körperelemente (46).

5. System nach einem der Ansprüche 1 bis 4, **dadurch gekennzeichnet, dass** die genannten Blöcke (30) eine allgemeine Pyramidenstumpfform haben.

6. System nach einem der Ansprüche 1 bis 5, **dadurch gekennzeichnet, dass** die genannten Befestigungselemente (44) an den genannten Seitenstangen (42) positionsverstellbar sind.

7. System nach einem der Ansprüche 1 bis 6, **dadurch gekennzeichnet, dass** die genannten zentralen Körperelemente (46) auf den genannten Seitenstangen (42) entlang bewegbar sind.

8. System nach einem der Ansprüche 1 bis 7, **dadurch gekennzeichnet, dass** die genannten Blöcke ferner eine Mehrzahl von sich von der genannten oberen Fläche (37) bis zu der genannten unteren Fläche (39) des genannten Blocks (30) erstreckenden Kanälen (34) zum Verringern hydrodynamischer Auftriebskräfte haben, die auf eine untere Fläche (39) des genannten Blocks (30) ausgeübt werden.

9. System nach einem der Ansprüche 1 bis 8, ferner **dadurch gekennzeichnet, dass** es zwei Kronenblöcke (31) hat, die an einem Übergang zwischen der genannten Krone (22) und den genannten Seiten des genannten Walls positionierbar sind, wobei die genannten Kronenblöcke (31) erste parallele obere und untere Flächen zum Positionieren auf der genannten Krone (22) und zweite parallele obere (37') und untere (39') Flächen haben, die von den genannten ersten parallelen oberen (37) und unteren Oberflächen (39) nach unten abgewinkelt sind.

## Revendications

1. Système de contrôle d'érosion destiné à être installé sur un remblai (20) qui aboute contre un front de vague, le remblai ayant deux côtés et un sommet (22), ledit système comprenant :
une pluralité de blocs (30) qui sont configurés pour être généralement positionnés de façon à couvrir une section significative du remblai (20), chacun desdits blocs (30) possédant un premier passage (32) qui s'étend dans ledit bloc et un deuxième passage (38) qui s'étend depuis ledit premier passage à travers ledit bloc, ledit deuxième passage (38) étant raccordé audit premier passage (32) ; et
une pluralité d'éléments de raccordement (40) servant à raccorder lesdits blocs (30) dans le plan longitudinal de sorte que lesdits blocs (30) s'étendent vers le haut sur l'un des côtés dudit remblai, au-dessus dudit sommet (22) et vers le bas sur l'autre côté dudit remblai, chacun desdits éléments de raccordement (40) possédant une section (42) qui est configurée de manière à être positionnée pour s'étendre depuis ledit deuxième passage (38) d'un bloc individuel (30) jusqu'à un deuxième passage (38) d'un bloc adjacent (30), et des éléments de fixation d'extrémité latérale (44) au niveau des extrémités respectives dudit élément de raccordement (40)
**caractérisé en ce que**
chacun desdits premiers passages (32) est un passage central et vertical (32);
chacun desdits deuxièmes passages (38) est une section en U centrale (38) s'étendant dans le plan longitudinal qui traverse ledit passage central vertical (32) à un angle par rapport à celui-ci et s'étend depuis une extrémité dudit bloc (30) jusqu'à l'autre extrémité dudit bloc ;
ledit élément de raccordement (40) comprenant un élément de corps central (46), une tige (42) qui passe à travers ledit élément de corps central (46) et un élément de fixation d'extrémité latérale (44) au niveau de chaque extrémité de la tige (42), ledit élément de corps central (46) étant configuré de manière à être positionné entre des blocs adjacents (30) afin d'absorber les forces de compression entre des blocs adjacents (30), ladite tige (42) étant configurée de manière à être disposée à l'intérieur de ladite section en U (38) s'étendant dans le plan longitudinal dudit bloc (30) ;
lesdits éléments de fixation (44), chacun étant configuré de manière à être positionné à l'intérieur dudit passage central vertical (32) d'un bloc (30) ; et
chacun desdits éléments de fixation (44) ayant une largeur qui n'est pas supérieure à la largeur dudit passage central vertical (32), mais ayant une largeur qui est supérieure à la largeur de ladite section en U (38) s'étendant dans le plan longitudinal.

2. Le système, selon les stipulations de la revendication 1, **caractérisé en ce qu'**une pluralité desdits blocs sont raccordés dans le plan longitudinal par lesdits éléments de raccordement afin de constituer une configuration ressemblant à une chaîne, une pluralité desdites configurations ressemblant à une chaîne étant configurées de manière à être posées l'une à côté de l'autre sur le remblai, tout en n'étant pas fixées l'une à l'autre.

3. Le système, selon les stipulations de la revendication 1, **caractérisé en ce que** lesdits blocs (30) possèdent des évidements (36) qui sont prévus dans les surfaces latérales de ceux-ci afin de recevoir lesdites sections de corps central (46).

4. Le système, selon les stipulations de la revendication 3, **caractérisé en ce que** lesdites sections de corps central (46) sont cylindriques avec des extrémités semi-sphériques, et **caractérisé en ce que** lesdits évidements (36) ont une forme semi-sphérique afin d'être en interaction avec lesdites extrémités semi-sphériques desdites sections de corps central (46).

5. Le système, selon les stipulations de l'une quelconque des revendications 1 à 4, **caractérisé en ce que** lesdits blocs (30) ont une forme généralement pyramidale tronquée.

6. Le système, selon les stipulations de l'une quelconque des revendications 1 à 5, **caractérisé en ce que** la position desdits éléments de fixation (44) peut être ajustée sur lesdites tiges latérales (42).

7. Le système, selon les stipulations de l'une quelconque des revendications 1 à 6, **caractérisé en ce que** lesdites sections de corps central (46) peuvent être déplacées le long desdites tiges latérales (42).

8. Le système, selon les stipulations de l'une quelconque des revendications 1 à 7, **caractérisé en ce que** lesdits blocs comportent en outre une pluralité de conduits (34) qui s'étendent depuis ladite surface supérieure (37) jusqu'à ladite surface inférieure (39) dudit bloc (30) afin de réduire les forces de soulèvement hydrodynamique qui s'exercent sur une surface inférieure (39) dudit bloc (30).

9. Le système, selon les stipulations de l'une quelconque des revendications 1 à 8, **caractérisé en outre par le fait que** le système inclut deux blocs de sommet (31) qui sont positionnables au niveau d'une transition entre ledit sommet (22) et lesdits côtés dudit remblai, lesdits blocs de sommet (31) possédant des premières surfaces parallèles supérieures et inférieures destinées à être positionnées sur ledit sommet (22), et des deuxièmes surfaces parallèles supérieures (37') et inférieures (39') inclinées vers le bas selon un certain angle depuis lesdites premières surfaces parallèles supérieures (37) et inférieures (39).
